**Europäisches Patentamt**

(19) **European Patent Office**

**Office européen des brevets**

(11) Veröffentlichungsnummer: **0 193 518**
**B1**

(12) # EUROPÄISCHE PATENTSCHRIFT

(45) Veröffentlichungstag der Patentschrift:
**21.09.88**

(51) Int. Cl.⁴: **C 02 F 1/52**, G 01 N 27/26

(21) Anmeldenummer: **86890002.8**

(22) Anmeldetag: **07.01.86**

(54) Verfahren zum Ausfällen von gelösten Sulfiden aus sulfidhaltigen Abwässern.

(30) Priorität: **27.02.85 AT 573/85**

(43) Veröffentlichungstag der Anmeldung:
**03.09.86 Patentblatt 86/36**

(45) Bekanntmachung des Hinweises auf die Patenterteilung:
**21.09.88 Patentblatt 88/38**

(84) Benannte Vertragsstaaten:
**BE CH DE FR GB IT LI LU NL SE**

(56) Entgegenhaltungen:
**DE-A-1 517 731**
**DE-B-1 283 372**
**US-A-4 329 224**

**F. MEINCK et al.: "Industrie-Abwässer", 4. Auglage, 1968, Seiten 595,604,605, G. Fischer Verlag, Stuttgart, DE; "Abwässer der Leder-, Leim- und Gelatineindustrie"**

(73) Patentinhaber: **Lukeneder, Adolf, Zibermayrstrasse 21, A-4021 Linz (AT)**

(72) Erfinder: **Lukeneder, Adolf, Zibermayrstrasse 21, A-4021 Linz (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 193 518 B1

**Beschreibung**

Die Erfindung bezieht sich auf ein Verfahren zum Ausfällen von gelösten Sulfiden aus sulfidhaltigen Abwässern durch Zumischen eines Fällungsmittels auf der Basis von wasserlöslichen Metallsalzen.

In Lederfabriken und Gerbereien wird neben anderen hochalkalischen Chemikalien Natriumhydrogensulfid zur Enthaarung der Häute eingesetzt, das die Abwässer dieser Fabriken und Gerbereien stark belastet. Das in den Abwässern gelöste Sulfid, das eine unangenehme beruchsbelästigung bedingt, muß daher ausgefällt werden, wobei es bekannt ist, als Fällungsmittel Eisensulfat zu verwenden. Zu diesem Zweck wird den Abwässern in Abhängigkeit von der jeweils anfallenden Abwassermenge eine Eisensulfatlösung zugemischt. Da sich jedoch der Sulfidgehalt der Abwässer ändert, kann die von der anfallenden Abwassermenge abhängige Dosierung der Eisensulfatlösung keine befriedigenden Ergebnisse hinsichtlich der Abwasserreinigung sicherstellen. Fallen nämlich keine sulfidhaltigen Äscherspülwässer oder nur kochsalzhaltige Abwässer an, so kommt es zu einem Überschuß an Eisenhydroxid und damit zu einer vermehrten Schlammbildung. Unangenehmer ist jedoch, wenn sehr stark sulfidhaltige Abwässer zufließen, weil dann die zugeführten Eisensulfatlösungen nicht ausreichen, um den gesamten Sulfidgehalt der Abwässer auszufällen, so daß es immer wieder zu Geruchsbelästigungen kommt. In diesem Zusammenhang ist außerdem zu berücksichtigen, daß die obere Grenze für die zugeführte Menge an Eisensulfatlösungen durch das Aufnahmevolumen der Behandlungsbecken für die Abwässer bestimmt wird, so daß die Zufuhr von Eisensulfatlösungen mit dem Erreichen des durch einen Füllstandsregler überwachten größten Füllstandes auf alle Fälle abgeschaltet wird, und zwar unabhängig von der erreichten Sulfidfällung.

Der Erfindung liegt somit die Aufgabe zugrunde, diese Mängel zu vermeiden und ein Verfahren zum Ausfällen von gelösten Sulfiden aus sulfidhaltigen Abwässern der eingangs geschilderten Art so zu verbessern, daß eine vollständige Ausfällung der Sulfide ohne unerwünschte Überdosierung des jeweils eingesetzten Fällungsmittels unter der Bedingung erreicht wird, daß weder der jeweilige Sulfidgehalt in den anfallenden Abwässern noch die Konzentration des Fällungsmittels bekannt ist.

Die Erfindung löst die gestellte Aufgabe dadurch, daß die Abwässer zunächst durch Zugabe von Säuren oder Alkalien auf einen vorbestimmten pH-Wert gebracht werden und daß dann den Abwässern unter Konstanthaltung des pH-Wertes das Fällungsmittel in Abhängigkeit von der Anzeige des Äquivalenzpunktes durch eine auf den vorbestimmten pH-Wert bezogene elektrochemische Messung zugemischt wird.

Durch die Messung des Äquivalenzpunktes kann in einfacher Weise angezeigt werden, ob die gesamte, in den Abwässern gelöste Sulfidmenge mit den zugeführten Metallsalzen reagiert hat, so daß die Anzeige des Äquivalenzpunktes zur Steuerung der Zufuhr des Fällungsmittels herangezogen werden kann, ohne eine Über- oder Unterdosierung befürchten zu müssen. In diesem Zusammenhang ist allerdings zu beachten, daß die elektrochemische Messung des Äquivalenzpunktes vom pH-Wert abhängt, der aufgrund der sich ändernden Zusammensetzung der anfallenden Abwässer nicht als konstant angesehen werden kann. Außerdem sinkt der pH-Wert zufolge der chemischen Vorgänge beim Ausfällen der Sulfide zwangsläufig ab, so daß die elektrochemische Messung des Äquivalenzpunktes ohne besondere Vorkehrungen zu erheblichen Fehlanzeigen und damit zu unzulässigen Fehldosierungen bei der Fällungsmittelzufuhr führen kann, weil beispielsweise bei einem niedrigeren pH-Wert das vollständige Ausfällen des gelösten Sulfids vorgetäuscht wird obwohl noch gelöstes Sulfid in den Abwässern vorhanden ist. Erst durch das Konstanthalten des pH-Wertes auf einem vorbestimmten Wert, auf den die elektrochemische Messung bezogen wird, können solche Fehlanzeigen des Äquivalenzpunktes ausgeschlossen und folglich genau abgestimmte Dosierungen des Fällungsmittels gewährleistet werden, ohne den Sulfidgehalt der zu reinigenden Abwässer und die Konzentration des Fällungsmittels zu kennen. Zu diesem Zweck braucht nach der Einstellung des pH-Wertes auf den vorbestimmten Wert der pH-Wert der Abwässer lediglich überwacht und gegebenenfalls durch Zufuhr von Säuren oder Alkalien konstant gehalten zu werden.

Obwohl grundsätzlich alle elektrochemischen Messungen des Äquivalenzpunktes für die Steuerung der Fällungsmittelzufuhr zu den Abwässern geeignet sind, werden in der Praxis besonders vorteilhafte Bedingungen erzielt, wenn das Erreichen des Äquivalenzpunktes durch eine Messung der Potentialdifferenz zwischen einer Indikatorelektrode und einer Bezugselektrode angezeigt wird, weil sich bei einer geeigneten Elektrodenwahl beim Erreichen des Äquivalenzpunktes ein meßtechnisch einfach erfaßbarer, charakteristischer Potentialsprung ergibt.

Da bei einer Konstanthaltung des pH-Wertes über die Anzeige des Äquivalenzpunktes jene Fällungsmittelmenge bestimmt werden kann, die gerade ausreicht, um das gesamte, in den Abwässern gelöste Sulfid auszufällen, ohne den Sulfidgehalt noch die Fällungsmittelkonzentration zu kennen, kann das Fällungsmittel vorteilhaft in Form einer wenigstens ein Metallsalz zum Ausfällen des Sulfides enthaltenden Altsäure oder eines aus einer solchen Altsäure gewonnenen Produktes den Abwässern zugemischt werden. Als Altsäuren können dabei alle Abfallsäuren aus Feuerverzinkereien, Bandbeizanlagen, Galvanikbetrieben u. dgl. eingesetzt werden, wenn sie nur ein für das Ausfällen von Sulfiden geeignetes, wasserlösliches Metallsalz beinhalten. Die Konzentration solcher Metallsalze spielt dabei keine Rolle, weil die Dosierung ja in Abhängigkeit von der Anzeige des Äquivalenzpunktes durchgeführt wird und es nur darauf ankommt, daß eine ausreichende Menge an Altsäure zur Verfügung steht. Daß anstelle der Altsäuren auch aus den Altsäuren gewonnene Festsubstanzen und deren wäßrige bzw. saure Lösungen eingesetzt werden können, ist wohl nicht besonders hervorzuheben.

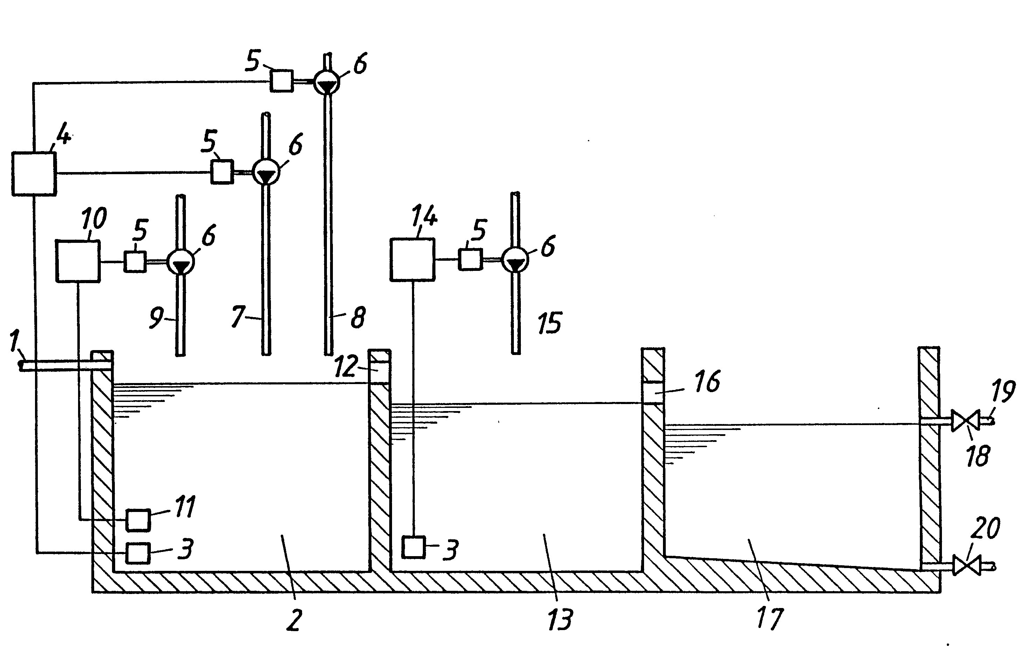

An Hand der Zeichnung, die eine Anlage zum Ausfällen von in Abwässern gelöstem Sulfid in einem schematischen Blockschaltbild zeigt, wird das erfindungsgemäße Verfahren näher erläutert.

Die zu reinigenden, sulfidhaltigen Abwässer werden über eine Speiseleitung 1 in ein Behandlungsbecken 2 gepumpt und dort durch Zufuhr von Säuren oder Alkalien auf einen vorbestimmten pH-Wert im alkalischen Bereich eingestellt. Zu diesem Zweck ist ein Geber 3 für den pH-Wert und ein an den Geber 3 angeschlossener Regler 4 vorgesehen, der in Abhängigkeit von einer Soll-Istwertdifferenz die Stelltriebe 5 zweier Dosierpumpen 6 so beaufschlagt, daß je nach den Anforderungen entweder Säure über eine Zuleitung 7 oder Alkalien über eine Zuleitung 8 in das Behandlungsbecken 2 geleitet wird, bis der eingestellte Soll wert des pH-Wertes erreicht ist. Der pH-Wert der im Behandlungsbecken 2 befindlichen Abwässer kann somit über den Regler 4 konstant gehalten werden.

Zum Ausfällen der in den Abwässern gelösten Sulfide wird ein Fällungsmittel auf der Basis eines wasserlöslichen Metallsalzes eingesetzt, das in Form einer Altsäure oder eines aus einer Altsäure gewonnenen Produktes über eine Zuleitung 9 in das Behandlungsbecken 2 eingebracht wird. Die Zufuhr dieses Fällungsmittels wird über einen Regler 10 gesteuert, der einerseits an einer elektrochemischen Meßeinrichtung 11 fur die Anzeige des Äquivalenzpunktes und anderseits an einen Stelltrieb 5 für eine Dosierpumpe 6 in der Zuleitung 9 für das Fällungsmittel angeschlossen ist.

Solange der Äquivalenzpunkt noch nicht erreicht ist, wird über den Regler 10 die Dosierpumpe 6 in der Zuleitung 9 beaufschlagt und das Fällungsmittel in das Behandlungsbecken gefördert, wobei über ein nicht dargestelltes Rührwerk für eine innige Vermischung des zugeförderten Fällungsmittels mit den Abwässern gesorgt wird. Wird durch die Meßeinrichtung 11, die vorzugsweise die Potentialdifferenz zwischen einer Indikatorelektrode und einer Bezugselektrode mißt, der fur die Erreichung des Äquivalenzpunkten charakteristische Potentialsprung angezeigt, so wird die Zufuhr des Fällungs mittels über den Regler 10 entsprechend gedrosselt. Den Abwässern im Behandlungsbecken 2 wird folglich nur die Menge an Fällungsmittel zugeführt, die gerade für das vollständige Ausfällen des in den Abwässern gelösten Sulfides notwendig ist. Bei einem Anstieg des Sulfidgehaltes im Behandlungsbecken 2 aufgrund der Abwasserzufuhr über die Leitung 1 wird zusätzliches Fällungsmittel über den Regler 10 angefordert. Wesentlich für die richtige Anzeige des elektrochemisch gemessenen Äquivalenzpunkten ist, daß der pH-Wert im Behandlungsbecken 2 über den Regler 4 tatsächlich konstant gehalten wird, weil die Meßeinrichtung 11 auf diesen pH-Wert bezogen sein muß und eine Änderung dieses Bezugswertes zu Fehlanzeigen führt.

Über einen Abwasserüberlauf 12 gelangt das Abwasser aus dem Behandlungsbecken 2 nach der Sulfidausfällung in ein Nachbehandlungsbecken 13, in dem dem Abwasser eine Aluminiumsulfatlösung zugemischt wird, und zwar in Abhängigkeit vom pH-Wert. Zu diesem Zweck ist wiederum ein Geber 3 für den pH-Wert vorgesehen, der eine Steuereinrichtung 14 für einen Stelltrieb 5 einer Dosierpumpe 6 beaufschlagt, die in eine Zuleitung 15 für die Aluminiumsulfatlösung eingeschaltet ist. Wird der pH-Wert durch die Zugabe der Aluminiumsulfatlösung auf einen vorgegebenen Wert abgesenkt, so wird die Zufuhr der Aluminiumsulfatlösung entsprechend gedrosselt, so daß die Zumischung der Aluminium sulfatlösung in Abhängigkeit von dem pH-Wert des Abwassers im Behandlungsbecken 13 erfolgt. Durch die Zugabe der Aluminiumsulfatlösung bildet sich neben den bereits vorhandenen festen Bestandteilen ein Aluminiumhydroxid, das eine bessere Klärung der Abwässer bewirkt und als Schlammkonditionierungsmittel dient, wodurch der Schlamm besser abgepreßt werden kann.

Nach dieser Behandlung fließt das Abwasser über einen weiteren Überlauf 16 in ein Absetzbecken 17, Wobei das Abwasser mit einem organischen Flockungshilfsmittel auf Polyacrylatbasis versetzt werden kann, so daß sich die im Abwasser enthaltenen Feststoffe zusammenballen und absetzen können. Das in dieser Weise geklärte Abwasser kann dann über eine mit einem Ventil 18 versehene Abzugsleitung 19 abgeführt werden. Der sich absetzende Schlamm kann über ein Abzugsventil 20 aus dem Absetzbecken 17 entfernt werden.

Ist der pH-Wert des gereinigten Abwassers zu hoch, so kann der pH-Wert zusätzlich durch Zuführung von Säuren auf das gewünschte Maß abgesenkt werden.

Wie bereits ausgeführt wurde, kann im Zusammenhang mit dem erfindungsgemäßen Verfahren jedes zur Fällung von Sulfiden geeignete Fällungsmittel auf der Basis von wasserlöslichen Metallsalzen eingesetzt werden, wobei sich der Vorteil ergibt, daß die Konzentration des mit den Sulfiden reagierenden Metallsalzes an sich keine besondere Rolle spielt. Es können daher die unterschiedlichsten Alt- und Abfallsäuren als Fällungsmittel eingesetzt werden, wenn nur sichergestellt ist, daß sie wenigstens ein geeignetes Metallsalz enthalten. Besonders vorteilhafte Ergebnisse konnten in der Praxis beim Einsatz von Altsäurebeizen beispielsweise aus Feuerverzinkereien und Bandbeizanlagen auf der Basis von Eisen (II)-chlorid und/oder Zinkchlorid sowie aus Schwefelsäurebeizen auf der Basis von Eisen (II)-sulfaten erzielt werden. Neben diesen Fällungsmitteln können aber auch Beizlösungen auf der Basis von Kupfer-, Nickel-, Kobald-, Zink- und Mangansulfat, Kupfer-, Nickel-, Kobald- und Manganchlorid sowie auf der Basis von Kupfer-, Nickel-, Kobald-, Zink- und Mangannitrat erfolgreich eingesetzt werden. Außerdem sind neben dem Eisen (II)-sulfaten und Eisen (II)-chloriden Eisen (II)-nitrate für das erfindungs gemäße Verfahren verwendbar. Von den Eisen (III)verbindungen sind wohl in der Praxis nur die Eisen (III)-chloride von Bedeutung, weil sie allein in einer größeren Menge als Abfallbeizen anfallen.

Die hochalkalischen sulfidhaltigen Abwässer aus Gerbereien fallen im allgemeinen mit einem pH-Wert zwischen 12 und 13 an. Unter Berücksichtigung des für das gereinigte Abwasser geforderten pH-Wertes ist es gunstig, den pH-Wert im Behandlungsbecken 2 durch Zugabe von Säuren über die Zuleitung 7 auf einen vorbestimmten pH-Wert beispielsweise im Bereich zwischen 10,5 und 11,5 einzustellen und auf dem eingestellten Wert konstant zu halten. Diese Einstellung kann mit Hilfe von Salzsäure, Schwefelsäure oder einer im Betrieb anfallenden Abfallsäure durchgeführt werden, wenn diese nicht zu sehr mit Metallsalzen belastet ist. Durch die Zugabe der sauren Fällungsmittellösung sinkt der pH-Wert ab, was das Zugeben von Alkalien in Form von Kalkmilch, Natronlauge, Kalilauge, Karbidkalkschlämmen, Ammoniaklösungen oder im Betrieb anfallenden alkalischen Lösungen erforderlich macht. Damit kann der Forderung nach der für das erfindungsgemäße Verfahren notwendigen Konstanthaltung des pH-Wertes einfach entsprochen werden, so daß eine kontinuierliche Abwasserreinigung im Durchflußverfahren möglich wird.

Die Anwendung der Erfindung ist selbstverständlich nicht auf die beispielsweise dargestellte Anlage beschränkt. So könnten z. B. die Dosierpumpen 6 durch entsprechend gesteuerte Dosierventile ersetzt oder die Abwässer zwischen den einzelnen Behandlungsbecken umgepumpt werden.

## Patentansprüche

1. Verfahren zum Ausfällen von gelösten Sulfiden aus sulfidhaltigen Abwässern durch Zumischen eines Fällungsmittels auf der Basis von wasserlöslichen Metallsalzen, dadurch gekennzeichnet, daß die Abwässer zunächst durch Zugabe von Säuren oder Alkalien auf einen vorbestimmten pH-Wert gebracht werden und daß dann den Abwässern unter Konstanthaltung des pH-Wertes das Fällungsmittel in Abhängigkeit von der Anzeige des Äquivalenzpunktes durch eine auf den vorbestimmten pH-Wert bezogene elektrochemische Messung zugemischt wird.

2. Verfahren nach Anspruch 1, dadurch gekennzeichnet, daß das Erreichen des Äquivalenzpunktes durch eine Messung der Potentialdifferenz zwischen einer Indikatorelektrode und einer Bezugselektrode angezeigt wird.

3. Verfahren nach Anspruch 1 oder 2, dadurch gekennzeichnet, daß das Fällungsmittel in Form einer wenigstens ein Metallsalz zum Ausfällen des Sulfides enthaltenden Altsäure oder eines aus einer solchen Altsäure gewonnenen Produktes den Abwässern zugemischt wird.

## Claims

1. A process of precipitating dissolved sulphides from sulphide-containing aqueous waste liquors by an admixing of a precipitant based on water-soluble metal salts, characterized in that the aqueous waste liquors are initially adjusted to a predetermined pH value by adding acids or alkalis, and that the precipitant is subsequently added to the aqueous waste liquors in dependence on the indication of the point of equivalence by an electrochemical measurement related to the predetermined pH value, while the pH value is maintained constant.

2. A process according to claim 1, characterized in that the fact that the point of equivalence has been reached is indicated as a result of a measurement of the potential difference between an indicator electrode and a reference electrode.

3. A process according to claim 1 or 2, characterized in that the precipitant is admixed to the aqueous waste liquors in the form of a waste acid which contains at least one metal salt for precipitating the sulphide, or in the form of a product that has been recovered from such waste acid.

## Revendications

1. Procédé pour la précipitation de sulfures dissous dans des eaux résiduaires, par mélange avec un agent de précipitation à base de sels métalliques solubles dans l'eau, caractérisé par le fait que l'on porte d'abord le pH des eaux résiduaires à une valeur prédéterminée, en ajoutant des acides ou des alcalis, et que l'on mélange ensuite aux eaux résiduaires, en maintenant le pH à une valeur constante, l'agent de précipitation en fonction de l'indication du point neutre par l'intermédiaire d'une mesure électrochimique relative à la valeur prédéfinie du pH.

2. Procédé selon la revendication 1, caractérisé par le fait que c'est une mesure de la différence de potentiel, entre une électrode d'indication et une électrode de référence, qui indique que le point neutre est atteint.

3. Procédé selon les revendications 1 et 2, caractérisé par le fait que l'on mélange aux eaux résiduaires l'agent de précipitation sous forme d'un acide de déchet contenant au moins un sel métallique pour la précipitation du sulfure, ou d'un produit obtenu à partir de ce type d'acide de déchet.

0 193 518